# EUROPÄISCHE PATENTSCHRIFT

(11) **EP 2 223 607 B1**
(45) Veröffentlichungstag und Bekanntmachung des Hinweises auf die Patenterteilung: **06.11.2013**
(21) Anmeldenummer: 09002170.0
(22) Anmeldetag: 17.02.2009
(51) Int. Cl.: A23G 9/24, A23G 9/48

(54) **Vorrichtung und Verfahren zur automatisierten Herstellung eines Speiseeisprodukts mit einem Überzug**
Device and method for automatic production of a food product with a coating
Dispositif et procédé de fabrication automatisée d'un aliment à base de crème glacée doté d'un revêtement

(43) Veröffentlichungstag der Anmeldung: 01.09.2010
(73) Patentinhaber: R&R Ice Cream Deutschland GmbH, 49080 Osnabrück (DE)
(72) Erfinder: Thaden, Manfred, 49080 Osnabruck (DE)
(74) Vertreter: Bünemann, Egon

(56) Entgegenhaltungen:
- WO-A1-2007/031148
- US-A- 6 099 874
- US-B1- 6 194 014
- US-B1- 7 005 151

## Beschreibung

Die Erfindung betrifft eine Vorrichtung und ein Verfahren zur automatisierten Herstellung eines Speiseeisprodukts mit einem Überzug.

Stieleis oder auch Eis in einer Waffel mit einem Überzug aus Schokolade oder Fruchtsoße sind bekannt. Diese Speiseeisprodukte werden automatisiert so hergestellt, dass das am Stiel befindliche Speiseeis in ein Tauchbecken mit einer flüssigen Überzugsmasse eingetaucht wird. Das Stieleis wird anschließend wieder herausgezogen und die Überzugsmasse an der Luft getrocknet. Das Tauchbecken wird über eine Einfüllöffnung permanent mit der flüssigen Überzugsmasse nachgefüllt. Ein Teil der eingefüllten Umhüllungsmasse läuft dabei durchgehend über eine Kante des Tauchbeckens über und wird in einem Kreislauf erneut dem Tauchbecken zugeführt. Das Tauchbecken ist dabei dergestalt dimensioniert, dass mehrere Speiseeisprodukte gleichzeitig eingetaucht und mit einem Überzug versehen werden können. Die so in Serie hergestellten Speiseeisprodukte weisen einen Überzug aus Schokolade oder Fruchtsoße mit stets gleichen sensorischen Eigenschaften auf.

Aus der WO 2007/031148 A1 ist ferner ein Speiseeis bekannt, das eine Umhüllung aus zwei nicht vollständig miteinander vermischten unterschiedlichen Überzugsmassen aufweist. Hierzu wird eine wässrige Phase einer ersten Überzugsmasse für das Speiseeis und eine ölhaltige Phase einer weiteren Überzugsmasse für das Speiseeis zunächst separat voneinander hergestellt und anschließend gemeinsam in ein Tauchbecken gegeben. In das gleiche Tauchbecken werden ohne erneute Befüllung mit wässriger oder öliger Phase nacheinander eine Vielzahl von Speiseeisprodukten eingetaucht. Eine Steuerung oder Einwirkung des Bedienpersonals auf die Art der Verteilung der beiden Bezugsmassen in dem Tauchbecken ist nicht möglich.

Aus der US 6,194,014 B1 ist ein Verfahren zur Herstellung eines Eisproduktes mit einem Überzug aus zwei unterschiedlichen Überzugsmassen bekannt. Die beiden unterschiedlichen Überzugsmassen werden hierbei gleichzeitig über den Boden des Tauchbeckens eingefüllt. Das Tauchbecken ist dabei an die Form des Speiseeisproduktes angepasst. Auch bei diesem Eisprodukt und dessen Herstellung ist das Ergebnis der Verteilung der beiden Überzugsmassen auf dem Speiseeisprodukt völlig unkontrolliert.

Der Erfindung liegt die Aufgabe zugrunde, eine Vorrichtung und ein Verfahren zur automatisierten Herstellung einer Mehrzahl Speiseeisprodukte mit einem Überzug aus zumindest zwei Überzugsmassen mit jeweils individuellen sensorischen Eigenschaften bereitzustellen, bei dem die Verteilung der Überzugsmassen in größerem Maße beeinflusst werden kann als bei herkömmlichen Produkten.

Die Erfindung wird durch eine Vorrichtung mit den Merkmalen des Anspruchs 1 und durch ein Verfahren mit den Merkmalen des Anspruchs 9 gelöst. Weitere vorteilhafte Ausgestaltungen der Erfindung sind den Unteransprüchen 2 bis 8 sowie 10 bis 14 zu entnehmen.

Die erfindungsgemäße Vorrichtung zur automatisierten Herstellung eines Speiseeisprodukts mit einem Überzug weist wenigstens ein Tauchbecken zur Aufnahme von Überzugsmassen auf, in die das Speiseeisprodukt eintauchbar ist. Die Vorrichtung umfasst ferner wenigstens einen ersten Vorratsbehälter zur Bevorratung einer ersten Überzugsmasse und einen weiteren Vorratsbehälter zur Bevorratung einer weiteren Überzugsmasse mit von der ersten Überzugsmasse abweichenden sensorischen Eigenschaften. Die Vorratsbehälter sind über Zulaufleitungen mit wenigstens einer Einfüllöffnung des Tauchbeckens verbunden. Die Vorrichtung weist ferner eine Steuereinheit auf, die den Zulauf der Überzugsmassen aus dem ersten und dem weiteren Vorratsbehälter in das Tauchbecken für jeden Tauchvorgang eines Speiseeisproduktes in das Tauchbecken steuert. Das Verhältnis des befüllbaren Innenvolumens des Tauchbeckens relativ zum Volumen des Anteils eines in die Überzugsmasse eingetauchten Speiseeisproduktes ist dabei kleiner als 3, insbesondere kleiner als 2. Zudem ist zumindest eine Zulaufleitung mit einer Mehrzahl nur dieser Zulaufleitung zugeordneter Einfüllöffnungen des Tauchbeckens verbunden.

Beim erfindungsgemäßen Verfahren wird das Tauchbecken mit wenigstens zwei Überzugsmassen mit abweichenden sensorischen Eigenschaften ohne eine vollständige Durchmischung der Überzugsmassen befüllt, dass Speiseeisprodukt ohne Überzug zur Herstellung des Überzugs in das Tauchbecken eingetaucht und wieder herausgezogen. Die anhaftenden Überzugsmassen werden anschließend verfestigt. Die wenigstens zwei im Tauchbecken befindlichen Überzugsmassen sind entweder unvollständig oder sogar nicht durchmischt. Die Überzugsmassen weisen voneinander abweichende sensorische Eigenschaften auf, wobei die sensorischen Eigenschaften visuell (Wahrnehmungssinn), geschmacklich (Geschmackssinn), aromatisch (Geruchssinn) oder haptisch (Tastsinn) unterschiedlich zueinander sein können. Auch sind Kombinationen der vorgenannten abweichenden sensorischen Eigenschaften erfingdungsgemäß mit eingeschlossen.

Zumindest eine Zulaufleitung ist mit einer Mehrzahl nur dieser Zulaufleitung zugeordneter Einfüllöffnungen des Tauchbeckens verbunden. Zumindest eine Überzugsmasse wird somit über eine Mehrzahl von Einfüllöffnungen des Tauchbeckens in das Tauchbecken eingeleitet, wobei durch jede Einfüllöffnung nur eine der Überzugsmassen eingeleitet wird. Durch diese Ausgestaltung wird die bereits zuvor beschriebene erwünschte Wirkung verstärkt, dass eine deutliche Separierung der unterschiedlichen Überzugsmassen in dem Tauchbecken erfolgt und der Überzug eines in das dergestalt befüllte Tauchbecken eingetauchten Speiseeisprodukts ebenfalls deutlicher voneinander separierte und in Bereichen ineinander verlaufende Überzugsmassen aufweist.

Das Verhältnis des befüllbaren Innenvolumens beträgt relativ zum Volumen des Anteils eines in die Überzugsmassen eingetauchten Speiseeisproduktes kleiner als drei, insbesondere kleiner als zwei. Wird ein Speiseeisprodukt nur teilweise in die im Tauchbecken befindlichen Überzugsmassen eingetaucht, so wird nur das Volumen des in die Überzugsmassen eingetauchten Anteils des Speiseeisproduktes berücksichtigt. Durch die vorgenannte Ausgestaltung wird eine bessere Steuerungsmöglichkeit der Verteilung der verschiedenen Überzugsmassen in dem Tauchbecken erreicht. Zudem müssen am Ende eines Produktionsvorgangs weniger Überzugsmassen zur Reinigung der Vorrichtung entfernt und entsorgt werden.

Bedingt durch den Aufbau der erfindungsgemäßen Vorrichtung und/oder den Ablauf des erfindungsgemäßen Verfahrens erfolgt beim Einfüllen der zwei unterschiedlichen Überzugsmassen in das Tauchbecken sowie einer Bewegung des Speiseeisproduktes in dem Tauchbecken beim Eintauchen oder Wiederherausziehen des Speiseeisproduktes in das bzw. aus dem Tauchbecken eine nur in Grenzen kontrollierbare unvollständige Durchmischung und Verteilung der im Tauchbecken befindlichen verschiedenen Überzugsmassen, die am Speiseeisprodukt zur Bildung des Überzugs anhaften bleiben. Bei abweichenden visuellen Eigenschaften der Überzugsmassen entsteht beispielsweise eine Art Marmorierung des so hergestellten Überzugs. Es können Teilbereiche des Überzugs entstehen, die vollständig von der einen oder der anderen Überzugsmasse gebildet werden. Zwischen diesen Teilbereichen entstehen Bereiche in denen die Überzugsmassen ineinander verlaufen. Nach dem Tauchvorgang wird das Volumen der am Speiseeisprodukt haften gebliebenen Überzugsmassen über die zumindest eine Einfüllöffnung in das Tauchbecken nachgefüllt. Die Verteilung der wenigstens zwei Überzugsmassen im Tauchbecken ist nach diesem Nachfüllvorgang abweichend zur Verteilung beim ersten Tauchvorgang. Entsprechend weicht auch die Verteilung der Überzugsmassen innerhalb des Überzugs des Speiseeisproduktes des im zweiten Tauchvorgang hergestellten Speiseeisprodukts von der Verteilung im Überzug des im ersten Tauchvorgang hergestellten Speiseeisprodukts ab. Diese Abweichungen setzten sich bei den darauf folgenden Nachfüll- und Tauchvorgängen zur Herstellung weiterer Speiseeisprodukte mit Überzug fort. Daher hat jedes erfindungsgemäß hergestellte Speiseeisprodukt einen Überzug mit erwünscht jeweils individuellen sensorischen Eigenschaften.

In einer bevorzugten Ausgestaltung der Erfindung weist das Tauchbecken mehr als eine Einfüllöffnung auf und jede Zulaufleitung ist jeweils mit zumindest einer ausschließlich dieser Zulaufleitung zugeordneten Einfüllöffnung des Tauchbeckens verbunden. Jede Überzugsmasse wird somit über wenigstens eine eigene Einfüllöffnung des Tauchbeckens in das Tauchbecken eingeleitet. Durch diese Ausgestaltung ist eine stärkere Separierung der im Tauchbecken befindlichen Überzugsmassen während des Einfüllens in das Tauchbecken möglich. Hierdurch wird eine stärker voneinander abweichende Verteilung der verschiedenen Überzugsmassen innerhalb des Überzugs eines Speiseeisprodukts erreicht. Bei Überzugsmassen mit beispielsweise visuell voneinander abweichenden Eigenschaften entsteht so ein Überzug mit besonders stark ausgeprägtem Marmorierungseffekt.

Bevorzugt sind die Einfüllöffnungen in das Tauchbecken regelmäßig voneinander beabstandet und über die Wandungen des Tauchbeckens verteilt. Diese Ausgestaltung verstärkt ebenfalls die vorgenannten erwünschten Wirkungen.

Mit Vorteil ist zumindest eine Einfüllöffnung mit einem Verschlusselement verschließbar ausgebildet. Zur Variation der Verteilung der unterschiedlichen Überzugsmassen im Tauchbecken wird diese zumindest eine Einfüllöffnung mit einem Verschlusselement verschlossen. Die Variationsmöglichkeiten der Verteilung der unterschiedlichen Überzugsmassen in dem Tauchbecken und darüber indirekt auch die Verteilung der Überzugsmassen in dem Überzug des in das Tauchbecken eingetauchten und wieder herausgezogenen Speiseeisprodukts wird dadurch weiter erhöht. So kann beispielsweise eine erste Serie Speiseeisprodukte mit Überzug hergestellt werden, bei der die zumindest eine Einfüllöffnung mit dem Verschlusselement verschlossen ist. In der darauf folgenden Serie hergestellter Speiseeisprodukte mit Überzug kann dann das Verschlusselement entfernt sein, sodass aus der zuvor verschlossenen Einfüllöffnung ebenfalls eine Überzugsmasse in das Tauchbecken einströmt.

Bevorzugt ist jedem Vorratsbehälter eine Dosierpumpe zur Beförderung einer vorgebbaren Menge Überzugsmasse über die Zulaufleitung und ein oder mehrere Einfüllöffnungen in das Tauchbecken zugeordnet. Die Überzugsmassen werden somit aus den unterschiedlichen Vorratsbehältern über Dosierpumpen dem Tauchbecken zugeführt. Durch diese Ausgestaltung ist eine gezielte Steuerung der Fördermenge der Überzugsmassen und/oder dessen Förderungszeitpunkt in das Tauchbecken möglich.

Mit Vorteil weist das Tauchbecken einen Innenraum mit abgerundeten Ecken auf. Die Speiseeisprodukte selbst weisen in der Regel ebenfalls abgerundete Ecken auf. Durch die abgerundeten Ecken des Innraums des Tauchbeckens wird das befüllbare Innenvolumen des Tauchbeckens reduziert. Hierdurch ist eine bessere Steuerung der Verteilung der Überzugsmassen innerhalb des Tauchbeckens möglich.

In einer besonders bevorzugten Ausgestaltung der Erfindung weist die Vorrichtung eine Steuereinheit auf, die die Befüllung des Tauchbeckens mit Überzugsmasse mittels Dosierpumpen und/oder eine Bewegung des Speiseeisprodukts relativ zum Tauchbecken und/oder eine Bewegung des Tauchbeckens relativ zum Speiseeisprodukt koordiniert. Mit Hilfe einer derartigen Steuereinheit kann eine Koordination der Befüllung des Tauchbeckens mit den unterschiedlichen Überzugsmassen und/oder eine Bewegung von Speiseeisprodukten und Tauchbecken relativ zueinander und in Abhängigkeit vom Befüllzustand des Tauchbeckens koordiniert und auch variiert werden. Hierdurch ist eine bessere Steuerung der Verteilung der Überzugsmassen im Überzug des erfindungsgemäß hergestellten Speiseeisproduktes möglich.

Mit Vorteil weist die Vorrichtung mehrere benachbart angeordnete Tauchbecken zum gleichzeitigen Eintauchen mehrerer Speiseeisprodukte auf, wobei in jedes Tauchbecken jeweils nur ein Speiseeisprodukt gleichzeitig eintauchbar ist. Durch diese Ausgestaltung ist eine Erhöhung der Produktionsgeschwindigkeit der Speiseeisprodukte mit Überzug möglich, wobei jedes der so hergestellten Speiseeisprodukte einen Überzug mit individuellen sensorischen Eigenschaften aufweist.

Bevorzugt weist die Vorrichtung dabei eine Mehrzahl Halteelemente auf, die an einer Fördereinrichtung angeordnet sind, wobei jedes Halteelement zur Halterung jeweils eines Speiseeisproduktes ausgebildet ist. Beispielsweise sind die Halteelement nebeneinander an einer schienenartigen Fördereinrichtung angeordnet, wobei der Abstand der einzelnen Halteelemente zueinander dem Abstand der einzelnen Tauchbecken voneinander entspricht, sodass die von den Halteelementen gehaltenen Speiseeisprodukte durch eine lineare Abwärtsbewegung gleichzeitig in die unter den Halteelementen befindlichen Tauchbecken eingetaucht werden können.

Weitere vorteilhafte Ausgestaltungen der Erfindung sind den Unteransprüchen sowie dem nachfolgend beschriebenen schematisch dargestellten Ausführungsbeispiel zu entnehmen; es zeigen
- Fig. 1: eine erfindungsgemäße Vorrichtung in einer Seitenansicht mit teilweise geschnittenem Tauchbecken,
- Fig. 2: ein erfindungsgemäßes Tauchbecken in einer teilweise geschnittenen Dar- stellung von vorne,
- Fig. 3: den Gegenstand aus Fig. 2 in einer teilweise geschnittenen Darstellung von der Seite und
- Fig. 4: den Gegenstand aus Fig. 2 in einer Aufsicht.

Nachfolgend werden gleichwirkende Elemente der Erfindung mit einer einheitlichen Bezugsziffer versehen, sofern dies sinnvoll ist. Die im Folgenden näher erläuterten Merkmale des Ausführungsbeispiels können auch einzeln oder in anderen Kombinationen, als im Ausführungsbeispiel gezeigt, Gegenstand der Erfindung sein.

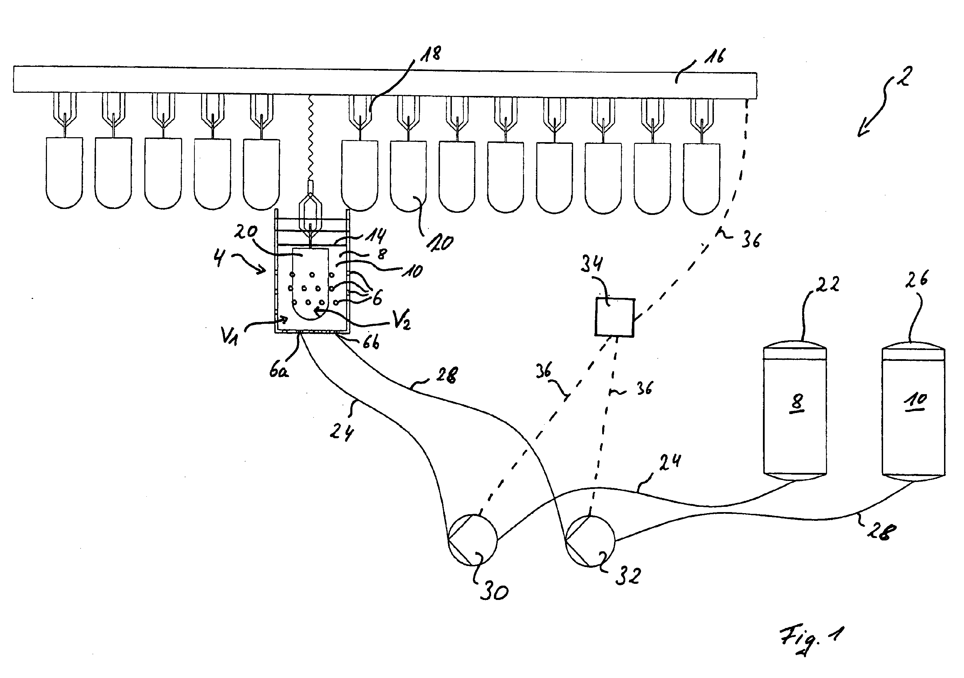

Fig. 1 zeigt eine erfindungsgemäße Vorrichtung 2 in teilweise geschnittener Seitenansicht. Die Vorrichtung 2 weist ein Tauchbecken 4 mit einer Mehrzahl Einfüllöffnungen 6, 6a, 6b auf, in dem sich eine erste Überzugsmasse 8 und eine weitere Überzugsmasse 10 befinden, die nicht oder nur unvollständig ineinander Durchmischt sind. Die Überzugsmassen 8, 10 weisen voneinander abweichende sensorische Eigenschaften auf. Der Füllstand der beiden Überzugsmassen 8, 10 im Tauchbecken 4 ist durch eine Fülllinie 14 veranschaulicht. An einer Fördereinrichtung 16 sind Halteelemente 18 angeordnet, die jeweils ein Speiseeisprodukt 20 halten. Ein Speiseeisprodukt 20 wird in Fig. 1 in die im Tauchbecken 4 befindlichen Überzugsmassen 8, 10 eingetaucht.

Die Vorrichtung 2 weist einen ersten Vorratsbehälter 22 zur Bevorratung der ersten Überzugsmasse 8 auf, der über eine erste Zulaufleitung 24 und eine nur dieser Zulaufleitung 24 zugeordneten Einfüllöffnung 6a des Tauchbeckens 4 mit dem Tauchbecken 4 verbunden ist. Die Vorrichtung 2 weist einen weiteren Vorratsbehälter 26 zur Bevorratung der weiteren Überzugsmasse 10 auf, der über eine weitere Zulaufleitung 28 und eine nur dieser Zulaufleitung 28 zugeordneten Einfüllöffnung 6b des Tauchbeckens 4 mit dem Tauchbecken 4 verbunden ist.

Alle Einfüllöffnungen 6 des Tauchbeckens 4 bis auf die von den Zulaufleitungen 24, 28 belegten Einfüllöffnungen 6a, 6b sind mit Verschlusselementen verschlossen, die im Ausführungsbeispiel jedoch nicht separat dargestellt sind. Jedem Vorratsbehälter 22, 26 ist eine Dosierpumpe 30, 32 zur Beförderung einer vergebaren Menge Überzugsmasse 8, 10 über die jeweiligen Zulaufleitungen 24, 28 in das Tauchbecken 4 zugeordnet. Das Verhältnis des befüllbaren Innenvolumens V1 des Tauchbeckens 4 relativ zum Volumen V2 des Anteils eines in die Überzugsmasse eingetauchten Speiseisproduktes 20 ist kleiner als drei, insbesondere kleiner als zwei.

Die Vorrichtung weist ferner eine Steuereinheit 34 auf, die den Zulauf der Überzugsmassen 8, 10 aus dem ersten Vorratsbehälter 22 und dem weiteren Vorratsbehälter 26 in das Tauchbecken 4 für jeden Tauchvorgang eines Speiseeisproduktes 20 in das Tauchbecken 4 steuert und alternativ oder ergänzend die Befüllung des Tauchbeckens mit Überzugsmassen 8, 10 mittels Dosierpumpen 30, 32 und/oder eine Bewegung des Speiseeisprodukts 20 relativ zum Tauchbecken 4 und/oder eine Bewegung des Tauchbeckens 4 relativ zum Speiseeisprodukt 20 koordiniert. Eine Verbindung der Steuereinheit 34 mit der Fördereinrichtung 16 und den Dosierpumpen 30, 32 ist schematisch durch gestrichelte Linien 36 veranschaulicht.

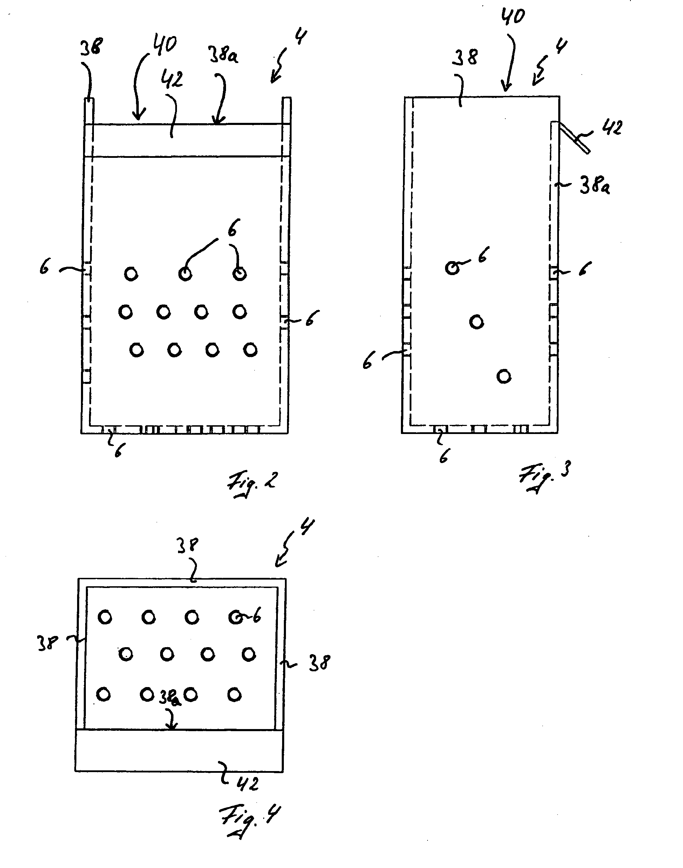

Fig. 2 bis 4 zeigen ein erfindungsgemäßes Tauchbecken 4 in teilweise geschnittener Darstellung die Positionierung der Einlassöffnungen 6, 6a, 6b darstellend. Diese sind voneinander beabstandet über den Umfang der Wandungen 38 des Tauchbeckens 4 angeordnet. Das Tauchbecken 4 ist an dessen Oberseite, dargestellt durch Pfeil 40, zum Eintauchen des Speiseeisproduktes 20 geöffnet und weist im Bereich der Oberseite 40 einen Überlauf 42 auf, der an einer Wandung 38a mit gegenüber benachbarten Wandungen 38 reduzierter Wandungshöhe angeordnet ist und eine Überlauflippe 42 umfasst. Durch diese Ausgestaltung wird eine Kontrolle des Überlaufs erreicht.

## Patentansprüche

1. Vorrichtung (2) zur automatisierten Herstellung eines Speiseeisprodukts (20) mit einem Überzug, mit wenigstens einem Tauchbecken (4) zur Aufnahme einer Überzugsmasse (8), in die das Speiseeisprodukt (20) eintauchbar ist, und mit einem Vorratsbehälter (22) zur Bevorratung der Überzugsmasse (8), wobei das Tauchbecken (4) zumindest eine Einfüllöffnung (6, 6a, 6b) aufweist und der Vorratsbehälter (22) über eine Zulaufleitung (24) mit der Einfollöffnung (6, 6a, 6b) des Tauchbeckens (4) verbunden ist, wobei die Vorrichtung wenigstens einen weiteren Vorratsbehälter (26) zur Bevorratung einer weiteren Überzugsmasse (10) mit von der ersten Überzugsmasse (8) abweichenden sensorischen Eigenschaften und eine Steuereinheit (34) aufweist, wobei der weitere Vorratsbehälter (26) über eine weitere Zulaufleitung (28) unmittelbar oder mittelbar mit einer Einfüllöffnung (6, 6a, 6b) des Tauchbeckens (4) verbunden ist und die Steuereinheit (34) den Zulauf der Überzugsmassen (8, 10) aus dem ersten und dem weiteren Vorratsbehälter (22, 26) in das Tauchbecken (4) für jeden Tauchvorgang eines Speiseeisproduktes (20) in das Tauchbecken (4) steuert und wobei das Verhältnis des befüllbaren Innenvolumens (V1) des Tauchbeckens (4) relativ zum Volumen (V2) des Anteils eines in die Überzugsmasse (8, 10) eingetauchten Speiseeisproduktes (20) kleiner als drei, insbesondere kleiner als zwei, beträgt und zumindest eine Zulaufleitung (24, 28) mit einer Mehrzahl nur dieser Zulaufleitung (24, 28) zugeordneter Einfüllöffnungen (6, 6a, 6b) des Tauchbeckens (4) verbunden ist.

2. Vorrichtung (2) nach Anspruch 1, **dadurch gekennzeichnet, dass** das Tauchbecken (4) mehr als eine Einfüllöffnung (6, 6a, 6b) aufweist und jede Zulaufleitung (24, 28) jeweils mit zumindest einer ausschließlich dieser Zulaufleitung (24, 28) zugeordneten Einfüllöffnung (6a, 6b) des Tauchbeckens (4) verbunden ist.

3. Vorrichtung (2) nach einem der Ansprüche 1 oder 2, **dadurch gekennzeichnet, dass** zumindest eine Einfüllöffnung (6, 6a, 6b) mit einem Verschlusselement verschließbar ausgebildet ist.

4. Vorrichtung (2) nach einem der vorhergehenden Ansprüche, **dadurch gekennzeichnet, dass** jedem Vorratsbehälter (22, 26) eine Dosierpumpe (30, 32) zur Beförderung einer vorgebbaren Menge Überzugsmasse (8, 10) über die Zulaufleitung (24, 28) in das Tauchbecken (4) zugeordnet ist.

5. Vorrichtung (2) nach einem der vorhergehenden Ansprüche, **dadurch gekennzeichnet, dass** das Tauchbecken(4) einen Innenraum mit abgerundeten Ecken aufweist.

6. Vorrichtung (2) nach einem der vorhergehenden Ansprüche, **gekennzeichnet durch** eine Ausbildung der Steuereinheit (34) dergestalt, dass sie die Befüllung des Tauchbeckens (4) mit Überzugsmassen (8, 10) mittels Dosierpumpen (30, 32) und/oder eine Bewegung des Speiseeisprodukts (20) relativ zum Tauchbecken (4) und/oder eine Bewegung des Tauchbeckens (4) relativ zum Speiseeisprodukt (20) koordiniert.

7. Vorrichtung (2) nach einem der vorhergehenden Ansprüche, **dadurch gekennzeichnet, dass** die Vorrichtung (2) mehrere benachbart angeordnete Tauchbecken (4) zum gleichzeitigen Eintauchen mehrerer Speiseeisprodukte (20) aufweist, wobei in jedes Tauchbecken (4) jeweils nur ein Speiseeisprodukt (20) gleichzeitig eintauchbar ist.

8. Vorrichtung (2) nach Anspruch 7, **dadurch gekennzeichnet, dass** die Vorrichtung (2) eine Mehrzahl Halteelemente (18) aufweist, die an einer Fördereinrichtung (16) angeordnet sind, wobei jedes Halteelement (18) zur Halterung jeweils eines Speiseeisprodukts (20) ausgebildet ist.

9. Verfahren zur automatisierten Herstellung eines Speiseeisprodukts mit einem Überzug, bei dem ein Tauchbecken (4) über zumindest eine Einfüllöffnung (6, 6a, 6b) mit wenigstens zwei Überzugsmassen (8, 10) mit abweichenden sensorischen Eigenschaften ohne eine vollständige Durchmischung der Überzugsmassen (8, 10) befüllt, das Speiseeisprodukt (20) ohne Überzug zur Herstellung des Überzugs in das Tauchbecken (4) eingetaucht und wieder herausgezogen wird und die anhaftenden Überzugsmassen (8, 10) verfestigt werden, wobei eine Steuereinheit (34) den Zulauf der Überzugsmassen (8, 10) aus einem ersten Vorratsbehälter (22) und wenigstens einem weiteren Vorratsbehälter (26) in das Tauchbecken (4) für jeden Tauchvorgang eines Speiseeisproduktes (20) in das Tauchbecken (4) steuert, das Verhältnis des befüllbaren Innenvolumens (V1) des Tauchbeckens (4) relativ zum Volumen (V2) des Anteils eines in die Überzugsmasse (8, 10) eingetauchten Speiseeisproduktes (20) kleiner als drei, insbesondere kleiner als zwei, beträgt und wobei zumindest eine Überzugsmasse (8, 10) über eine Mehrzahl von Einfüllöffnungen (6, 6a, 6b) des Tauchbeckens (4) in das Tauchbecken (4) eingeleitet wird und dabei durch jede Einfüllöffnung (6, 6a, 6b) nur eine der Überzugsmassen (8, 10) eingeleitet wird.

10. Verfahren nach Anspruch 9, **dadurch gekennzeichnet, dass** jede Überzugsmasse (8, 10) über wenigstens eine eigene Einfüllöffnung (6a, 6b) des Tauchbeckens (4) in das Tauchbecken (4) eingeleitet wird.

11. Verfahren nach einem der Ansprüche 9 oder 10, **dadurch gekennzeichnet, dass** zur Variation der Verteilung der unterschiedlichen Überzugsmassen (8, 10) im Tauchbecken (4) zumindest eine Einfüllöffnung (6) mit einem Verschlusselement verschlossen wird.

12. Verfahren nach einem der Ansprüche 9 bis 11, **dadurch gekennzeichnet, dass** die Überzugsmassen (8, 10) aus unterschiedlichen Vorratsbehältern (22, 26) über Dosierpumpen (30, 32) dem Tauchbecken (4) zugeführt werden.

13. Verfahren nach einem der Ansprüche 9 bis 12, **dadurch gekennzeichnet, dass** die Befüllung des Tauchbeckens (4) mit Überzugsmasse (8, 10) und/oder eine Bewegung der Speiseeisprodukte (20) relativ zum Tauchbecken (4) und/oder eine Bewegung des Tauchbeckens (4) relativ zum Speiseeisprodukte (20) koordiniert wird.

14. Verfahren nach einem der Ansprüche 9 bis 13, **dadurch gekennzeichnet, dass** mehrere Tauchbecken (4) benachbart angeordnet und mehrerer Speiseeisprodukte (20) gleichzeitig in die Tauchbecken (4) eingetaucht werden, wobei in jedes Tauchbecken (4) jeweils nur ein Speiseeisprodukt (20) gleichzeitig eingetaucht wird.

## Claims

1. A device (2) for automaticproduction of an ice cream product (20) comprising a coating, with at least one dippingtank (4) that stores a coating substance (8), intowhich the ice cream product (20) can be dipped, and with a reservoir (22) for storage of the coating substance (8), whereby the dippingtank (4) comprises at least onefill opening (6, 6a, 6b) and the reservoir (22) via a feed line (24) is connected to the feed opening (6, 6a, 6b) of the dippingtank (4), whereby the reservoircomprises at leastone additional reservoir (26) for holding another coating substance (10) with sensory characteristics differing from the first coating substance (8) and a control unit (34), whereby the additional reservoir (26) via an additional feed line (28); is connected indirectly or directlyvia a feed opening (6, 6a, 6b) to the dippingtank (4) and the control unit (34) regulates the inflow of the coating substance (8, 10) from the first and additional reservoirs (22, 26) into the dippingtank (4) for each dipping process with the ice cream product (20) into the dippingtank (4) and whereby the ratio of the internal fill volume(V1) of the dippingtank (4) compared to the volume (V2) of the portion of the dipped ice cream product (20) in the coating substance (8,10)is less than three, especially less than two and is connected to at least one feed line (24, 28) with a majorityonly to thisfeed line (24, 28) via the allocated fill openings (6, 6a, 6b) of the dipping tank (4)

2. The device (2) according to Claim 1, **characterized in that** the dipping tank (4) comprises more than one fill opening (6, 6a, 6b) and each feed line(24, 28) is respectively connected to at least onejust to this feed line (24, 28) allocated to the fill openings (6a, 6b) of the dipping tank(4).

3. A device (2) according to Claim 1 or 2, characterized in thatat least one fill opening (6, 6a, 6b) is formed with a sealed closing element

4. A device (2) according to one of the preceding claims, **characterized in that** each reservoir (22, 26) is assigned a dosing pump (30, 32) to convey a predetermined quantity of coating substance (8, 10) via the feed line (24, 28) into the dip tank (4).

5. A device (2) according to one of the preceding claims, characterized in thatthe dipping tank(4) comprisesan inner chamber with round edges.

6. A device (2) according to one of the preceding claims, **characterized by** the design of a control unit (34) in such a way thatit coordinates filling of the dipping tank (4) with a coating substance (8,10) using dosing pumps (30,32) and/or movement of the ice cream product (20) in relation to the dipping tank (4) and/or movement of the dipping tank (4) in relation to the ice cream product (20).

7. A device (2) according to one of the preceding claims, characterized in thatthe device (2) comprises several adjacently arranged dipping tanks for simultaneous dipping of several ice cream products (20), whereby in each dipping tank(4) respectively only one ice cream product (20) can be dipped simultaneously.

8. A device (2) according to Claim 7, characterized in thatthe device (2) comprises a majority of retaining elements (18), which are arranged on aconveying device (16), whereby each retaining element (18) is respectively constructed to hold one ice cream product (20).

9. A procedure for automatic production of an ice cream product comprising a coating, whereby a dipping tank (4) via at least one fill opening (6, 6a, 6b) is filled with at leasttwo coating substances (8,10) with varying sensory properties without thoroughly mixing the coating substances (8,10), the ice cream product (20) is dipped (4) without coating to produce the coating in the dip tank and removed again and the adherent coating substances (8,10) harden, whereby a control unit (34) regulates the inflow of the coating substance (8, 10) from a first reservoir (22) and at least one other reservoir (26) into the dipping tank (4) for each dipping process of an ice cream product(20) into the dipping tank (4), the ratio of the internal fill volume (V1) of the dippingtank (4) compared to the volume (V2) of the portion of the dipped ice cream product (20) in the coating substance (8,10) is less than three, especially less than two and whereby at least one coating substance (8, 10) is introduced via a plurality of fill openings(6, 6a, 6b) of the dipping tank (4) into the dipping tank(4) and thus only one of the coating substances (8, 10) is introduced through each fill opening (6, 6a, 6b).

10. A procedure according to Claim 9, characterized in thateach coating substance (8,10) via at least one separate feed opening (6a, 6b) of the dipping tank (4) is introduced into the dipping tank (4).

11. A procedure according to Claim 9 or 10, characterized in thatto vary distribution of the variouscoating substances (8,10) into the dipping tank (4) at least one feed opening (6) was closed with a closing element.

12. A procedure according to one of the Claims 9 to 11, characterized in thatthe coating substances (8, 10) is supplied from various reservoirs (22, 26) via dosing pumps (30, 32) to the dipping tank (4).

13. A procedure according to one of the Claims 9 to 12, **characterized in that** filling of the dipping tank (4) with coating substances (8,10) and/or movement of the ice cream products (20) is coordinated in relation to the dipping tank (4) and/or movement of the dipping tank (4) in relation to the ice cream products (20).

14. A procedure according to one of the Claims 9 to 13, characterized in thatseveral dipping tanks (4) are arranged adjacently and several ice cream products (20) are simultaneously dipped in the dipping tanks (4), whereby in each dippingtank (4) respectively only one ice cream product (20) is dipped.

## Revendications

1. Dispositif (2) pour la fabrication automatisée d'un aliment à base de crème glacée (20) doté d'un revêtement, avec au moins une cuve à immersion (4) pour la réception d'une masse de revêtement (8), dans laquelle l'aliment à base de crème glacée (20) peut être plongé, et avec un réservoir de stockage (22) pour le stockage de la masse de revêtement (8), la cuve à immersion (4) présentant au moins une ouverture de remplissage (6, 6a, 6b) et le réservoir de stockage (22) étant relié par une conduite d'amenée (24) à l'ouverture de remplissage (6, 6a, 6b) de la cuve à immersion (4), le dispositif présentant au moins un autre réservoir de stockage (26) pour le stockage d'une autre masse de revêtement (10) avec des propriétés sensorielles divergeant de la première masse de revêtement (8) et une unité de commande (34), l'autre réservoir de stockage (26) étant relié par une autre conduite d'amenée (28) directement ou indirectement à une ouverture de remplissage (6, 6a, 6b) de la cuve à immersion (4) et l'unité de commande (34) commandant l'amenée des masses de revêtement (8, 10) du premier et de l'autre réservoir de stockage (22, 26) dans la cuve à immersion (4) pour chaque processus d'immersion d'un aliment à base de crème glacée (20) dans la cuve à immersion (4) et le rapport entre le volume intérieur (V1) remplissable de la cuve à immersion (4) et le volume (V2) de la part d'un aliment à base de crème glacée (20) plongé dans la masse de revêtement (8, 10) étant inférieur à trois, en particulier inférieur à deux et au moins une conduite d'amenée (24, 28) étant reliée à une pluralité d'ouvertures de remplissage (6, 6a, 6b) associées seulement à cette conduite d'amenée (24, 28) de la cuve à immersion (4).

2. Dispositif (2) selon la revendication 1, **caractérisé en ce que** la cuve à immersion (4) présente plus d'une ouverture de remplissage (6, 6a, 6b) et chaque conduite d'amenée (24, 28) est reliée respectivement à au moins une ouverture de remplissage (6a, 6b) de la cuve à immersion (4) associée exclusivement à cette conduite d'amenée (24, 28).

3. Dispositif (2) selon l'une quelconque des revendications 1 ou 2, **caractérisé en ce qu'**au moins une ouverture de remplissage (6, 6a, 6b) est réalisée refermable avec un élément de fermeture.

4. Dispositif (2) selon l'une quelconque des revendications précédentes, **caractérisé en ce qu'**une pompe de dosage (30, 32) est associée à chaque réservoir de stockage (22, 26) pour le transport d'une quantité prescriptible de masse de revêtement (8, 10) par la conduite d'amenée (24, 28) dans la cuve à immersion (4).

5. Dispositif (2) selon l'une quelconque des revendications précédentes, **caractérisé en ce que** la cuve à immersion (4) présente un espace intérieur avec des coins arrondis.

6. Dispositif (2) selon l'une quelconque des revendications précédentes, **caractérisé par** une réalisation de l'unité de commande (34) de telle manière qu'elle coordonne le remplissage de la cuve à immersion (4) avec des masses de revêtement (8, 10) à l'aide de pompes de dosage (30, 32) et/ou un mouvement de l'aliment à base de crème glacée (20) par rapport à la cuve à immersion (4) et/ou un mouvement de la cuve à immersion (4) par rapport à l'aliment à base de crème glacée (20).

7. Dispositif (2) selon l'une quelconque des revendications précédentes, **caractérisé en ce que** le dispositif (2) présente plusieurs cuves à immersion (4) disposées de manière contigüe pour l'immersion simultanée de plusieurs aliments à base de crème glacée (20), respectivement un seul aliment à base de crème glacée (20) pouvant être plongé simultanément dans chaque cuve à immersion (4).

8. Dispositif (2) selon la revendication 7, **caractérisé en ce que** le dispositif (2) présente une pluralité d'éléments de retenue (18) qui sont disposés sur un dispositif de transport (16), chaque élément de retenue (18) étant réalisé pour le maintien respectivement d'un aliment à base de crème glacée (20).

9. Procédé pour la fabrication automatisée d'un aliment à base de crème glacée doté d'un revêtement, pour lequel une cuve à immersion (4) est remplie par au moins une ouverture de remplissage (6, 6a, 6b) d'au moins deux masses de revêtement (8, 10) avec des propriétés sensorielles divergentes sans un mélange complet des masses de revêtement (8, 10), l'aliment à base de crème glacée (20) étant plongé et retiré sans revêtement pour la fabrication du revêtement dans la cuve à immersion (4) et les masses de revêtement (8, 10) adhérentes étant fixées, une unité de commande (34) commandant l'amenée des masses de revêtement (8, 10) d'un premier réservoir de stockage (22) et d'au moins un autre réservoir de stockage (26) dans la cuve à immersion (4) pour chaque processus d'immersion d'un aliment à base de crème glacée (20) dans la cuve à immersion (4), le rapport entre le volume intérieur (V1) remplissable de la cuve à immersion (4) et le volume (V2) de la part d'un aliment à base de crème glacée (20) plongé dans la masse de revêtement (8, 10) étant inférieur à trois, en particulier à deux et au moins une masse de revêtement (8, 10) étant introduite par une pluralité d'ouvertures de remplissage (6, 6a, 6b) de la cuve à immersion (4) dans la cuve à immersion (4) et seule l'une des masses de revêtement (8, 10) étant introduite par chaque ouverture de remplissage (6, 6a, 6b).

10. Procédé selon la revendication 9, **caractérisé en ce que** chaque masse de revêtement (8, 10) est introduite par au moins une propre ouverture de remplissage (6a, 6b) de la cuve à immersion (4) dans la cuve à immersion (4).

11. Procédé selon l'une quelconque des revendications 9 ou 10, **caractérisé en ce qu'**au moins une ouverture de remplissage (6) est fermée par un élément de fermeture pour la variation de la répartition des différentes masses de revêtement (8, 10) dans la cuve à immersion (4).

12. Procédé selon l'une quelconque des revendications 9 à 11, **caractérisé en ce que** les masses de revêtement (8, 10) sont amenées de différents réservoirs de stockage (22, 26) par des pompes de dosage (30, 32) à la cuve à immersion (4).

13. Procédé selon l'une quelconque des revendications 9 à 12, **caractérisé en ce que** le remplissage de la cuve à immersion (4) avec une masse de revêtement (8, 10) et/ou un mouvement des aliments à base de crème glacée (20) par rapport à la cuve à immersion (4) et/ou un mouvement de la cuve à immersion (4) par rapport aux aliments à base de crème glacée (20) est coordonné.

14. Procédé selon l'une quelconque des revendications 9 à 13, **caractérisé en ce que** plusieurs cuves à immersion (4) sont disposées de manière contiguë et plusieurs aliments à base de crème glacée (20) sont plongés simultanément dans les cuves à immersion (4), dans chaque cuve à immersion (4) étant plongé simultanément respectivement un seul aliment à base de crème glacée (20).
